# EUROPEAN PATENT APPLICATION

(11) **EP 1 533 777 A1**
(43) Date of publication of application: **25.05.2005**
(21) Application number: 03725735.9
(22) Date of filing: 02.05.2003
(51) Int. Cl.: G09B 21/00, A61F 9/08, G08B 6/00

(54) **TACTILE DISPLAY DEVICE AND METHOD OF CONTROLLING TACTILE DISPLAY DEVICE**

(30) Priority: 08.05.2002 JP 2002132627
(71) Applicant: Uniplan Co., Ltd, Yatsuka-gun, Shimane 699-0101 (JP)
(72) Inventor: TAKAHASHI, Masaaki, Yatsuka-gun, Shimane 699-0101 (JP)
(74) Representative: Smith, Norman Ian
(86) International application number: PCT/JP2003/005614
(87) International publication number: WO 2003/096306

(57) **Abstract**

In a tactile display apparatus which displays image information as differences in elevation created among tactile pins which are disposed crisscross in a matrix arrangement, a fewer number of solenoids are used which make the tactile pins project and retract, the number of components is accordingly reduced and the crisscross adjacent gaps between the tactile pins are narrow. Since the solenoids 4 which make the tactile pins 10 project and retract are disposed in a row vertically, one for every preset number of the tactile pins which are lined up in the vertical direction, to a movable unit 5 which is capable of freely moving in the vertical direction and the horizontal direction along which the tactile pins are disposed, and since the movable unit repeatedly moves along the vertical direction and the horizontal direction in turn, the solenoids make all tactile pins project and retract.

## Description

### FIELD OF THE INVENTION

The present invention belongs to the technical field of a tactile display apparatus which one touches by hand and recognizes screen information and a control method for a tactile display apparatus.

### BACKGROUND ART

A tactile display apparatus having a structure which permits a visually handicapped person to recognize image information, such as a photograph, a graphic and a letter, by means of his/her tactile sense at his/her fingertips has been proposed over recent years. Known as such an apparatus is one in which pins which are capable of freely projecting and retracting are disposed crisscross like a matrix on a display board portion, and as the pins project and retract under control and difference in elevation appears among the pins, a visually handicapped person feels and senses the difference in elevation with his hand and recognizes image information, as described in Japanese Published Unexamined Patent Application No. 2000-221872 for instance. In a structure of such an apparatus, each one of the pins above projects and retracts under control by means of an actuator such as a solenoid (electromagnet) or the like which corresponds to each such pin.

However, in a conventional apparatus above, all pins are made to project and retract by corresponding solenoids. Hence, the crisscross adjacent gaps between the pins cannot be as narrow as or narrower than the crisscross widths of the solenoids. This not only increases the crisscross gaps between the pins and makes it hard to display a fine image, but also leads to a problem where the larger the number of pins is, the larger the number of components including solenoids becomes and that control and management of the increased number of solenoids becomes complex. These are the problems to be solved by the invention.

### SUMMARY OF THE INVENTION

The present invention has been made to solve the problems in light of the above, and provides a tactile display apparatus in which tactile pins disposed crisscross in a matrix arrangement on a display board portion are capable of freely projecting and retracting and information such as an image is displayed in accordance with concavities and convexities formed as said tactile pins project and retract, comprising: a movable unit which is capable of freely moving in the vertical direction and the horizontal direction relative to the display board portion; actuators disposed at the movable unit so as to control projecting and retracting of the tactile pins; a control part which controls driving of the actuators in accordance with an information signal such as an image input from outside; and movement mechanisms which move the movable unit in the vertical direction and the horizontal direction.

This substantially reduces the number of actuators which control projecting and retracting of the tactile pins, and hence, the number of components.

The actuators which control projecting and retracting of the tactile pins may be provided to the movable unit so as to be disposed in a vertical row and/or horizontal row, one for every preset number of the tactile pins lined up in the vertical direction and/or the horizontal direction, in which case since this permits setting the crisscross adjacent gaps between the tactile pins narrow without any restriction imposed upon the actuators, it is possible to even finely display information such as an image on the display board portion and obtain a sharp tactile display having a high resolution.

The display board portion may be formed by an upper and a lower plate, a pin holding member which is like a sheet firmly held airtightly between the upper and the lower plates, and the tactile pins penetrating and supported in through holes which are formed crisscross in a matrix arrangement in the upper plate and the lower plate and the pin holding member. This makes it possible to maintain the pin holding members in a state of tension, hold the tactile pins securely at projecting positions or retracting positions, and finish the display board portion like a compact kit which is thin between the top and the bottom.

When the pin holding member is formed by cloth, such as denim which has friction force, it is possible to securely hold the tactile pins and apply appropriate frictional force which will not hinder the projecting and retracting movements of the tactile pins.

The display board portion may be attached to a top surface portion of a case body of the tactile display apparatus in such a manner that the display board portion by itself can be freely attached to and detached from the case body from outside, in which case it is easy to attach and detach the display board portion, thus contributing to an improvement in the ease of assembling and maintainability.

Further, tactile pins are formed by attaching tactile dot parts, which are formed by spring pins, to the tip ends of main pin parts. Hence, the tactile pins are easily assembled and resistant against vibrations, and allow the differences in elevation to be recognized and identified easily.

The actuation pins which move forward and backward as the actuators operate may be disposed at the movable unit. The tactile pins may protrude as the actuation pins move forward, the actuation pins may move away from the tactile pins when retracting, and the actuation pins may move forward and backward while the movable unit moves. Hence, it is possible to continuously and efficiently control projecting or retracting of the tactile pins.

The movable unit moves while avoiding any contact or connection with the display board portion except for the actuation pins contacting the tactile pins. The movable unit can therefore move vertically and horizontally at a high speed.

The movable unit is supported for free vertical movement via a vertical movement mechanism by a cradle which is supported for free horizontal movement via a horizontal movement mechanism by the case body of the tactile display apparatus. The movable unit can therefore move vertically and horizontally in a smooth manner.

The movable unit moves horizontally beyond the range in which the actuators control projecting or retracting of the tactile pins, and the movable unit moves vertically while moving horizontally beyond the range in which projecting or retracting of the tactile pins is controlled. Hence, even when the timing of vertical movements is not set strictly, the movable unit can move horizontally and vertically in turn in a smooth fashion.

Further, the vertical movement mechanism of the movable unit may be formed by an actuating member which moves horizontally as one unit with the movable unit, a fixed member which is fixed to the case body of the tactile display apparatus, and a one-way clutch mechanism which moves the movable unit vertically as the actuating member moving horizontally interferes with the fixed member.

In this case, the fixed member may be disposed at both ends of the range in which the movable unit moves horizontally. The movable unit is caused to move vertically during interference of the actuating member with the fixed member which is caused as the movable unit moves horizontally toward one side, whereas the movable unit does not move vertically during interference of the actuating member with the fixed member which is caused as the movable unit moves horizontally toward the other side.

The invention also provides for a control method for a tactile display apparatus in which tactile pins disposed in a matrix arrangement on a display board portion are capable of freely projecting or retracting and information, such as an image, is displayed in accordance with concavities and convexities formed as the tactile pins project or retract, comprising: a movable unit which is capable of freely moving in the vertical direction and the horizontal direction relative to the display board portion; actuators disposed at the movable unit so as to control projecting or retracting of the tactile pins; a control part which controls the driving of the actuators in accordance with an information signal, such as an image, received from outside; movement mechanisms which move the movable unit in the vertical direction and the horizontal direction, in the tactile display apparatus; and an external control part for outputting information signals, such as an image, to the tactile display apparatus, the external control part pixelating information fed to the external control part into the respective pixels in accordance with the number of the tactile pins which are disposed, binarizing the respective pixels so that the pixels will correspond to the projecting or retracting of the tactile pins, sorting thus binarized signals in the order of driving the actuators, and outputting thus binarized signals.

This makes it possible to precisely display, using differences in elevation among the tactile pins, image information fed to the external control part.

### BRIEF DESCRIPTION OF THE DRAWINGS

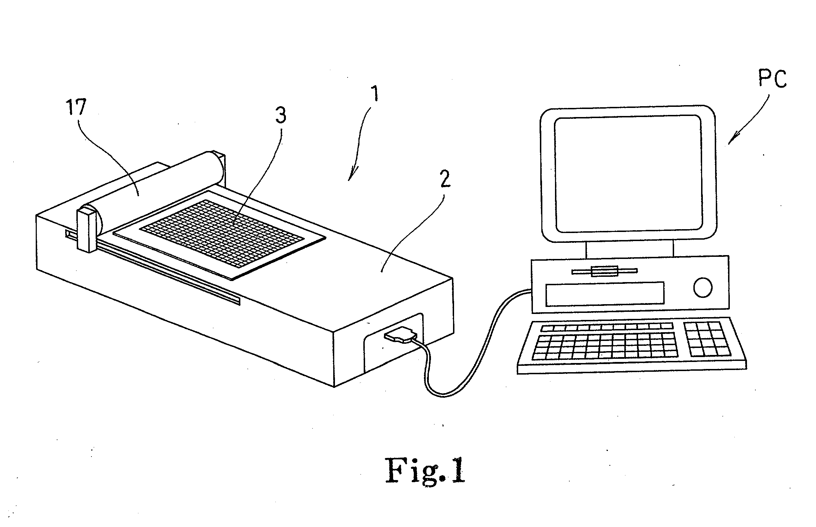

Fig. 1 is a schematic diagram of a tactile display apparatus and a host computer;

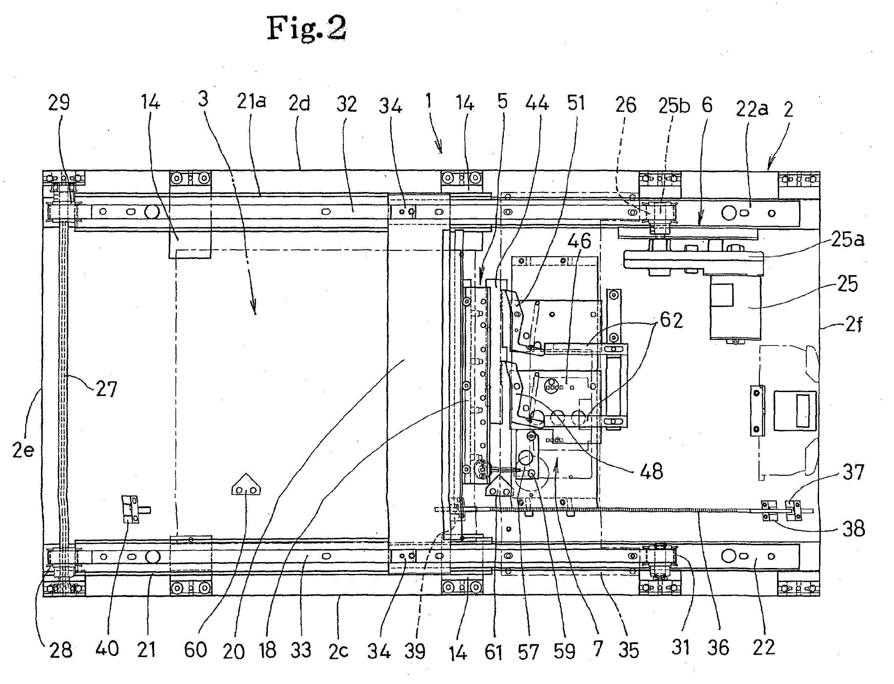

Fig. 2 is a plan view which shows the inside of a case of the tactile display apparatus, except for a certain portion;

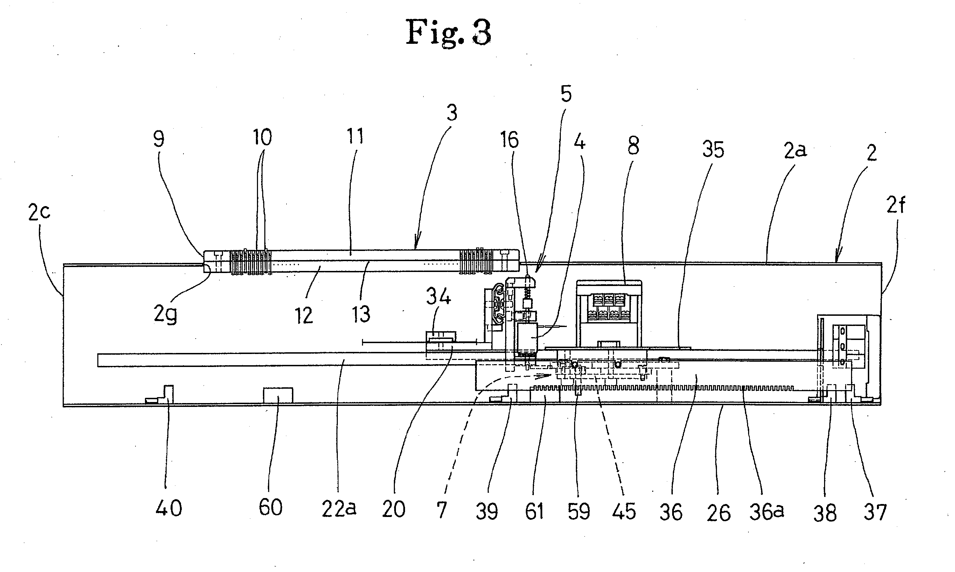

Fig. 3 is a front view which shows the inside of the case of the tactile display apparatus, except for a certain portion;

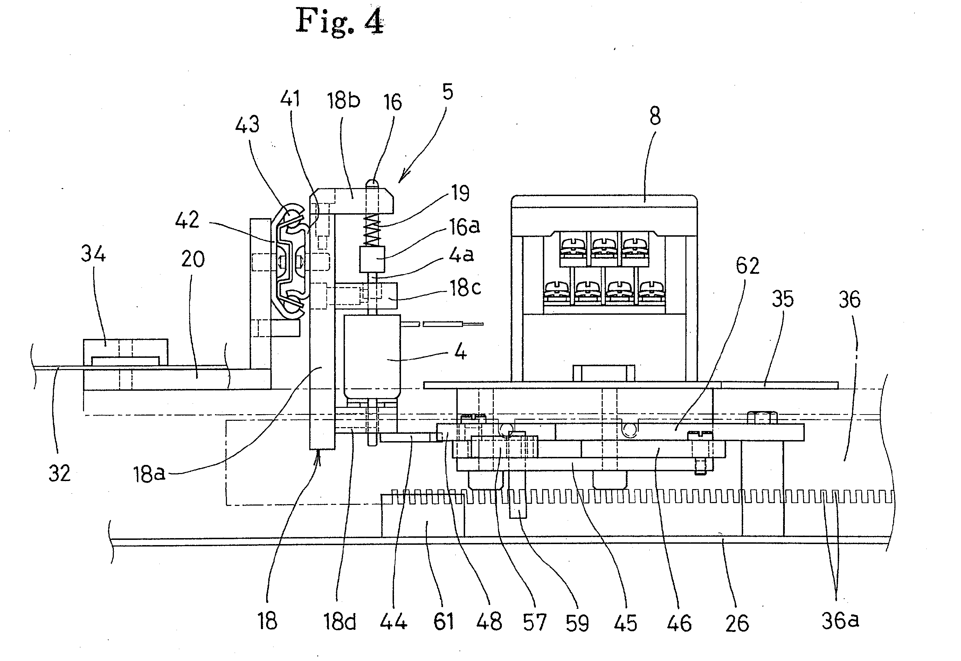

Fig. 4 is a partially expanded drawing of Fig. 3;

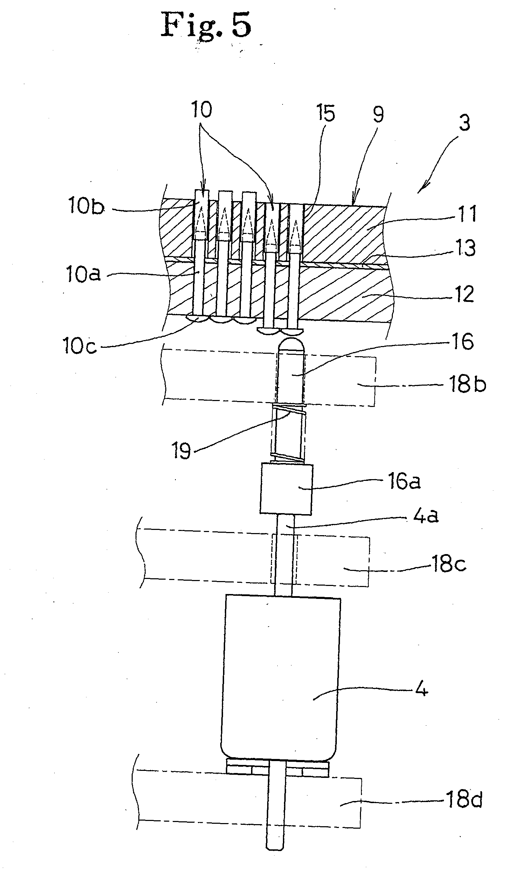

Fig. 5 is a diagram for describing movements of tactile pins upward and downward;

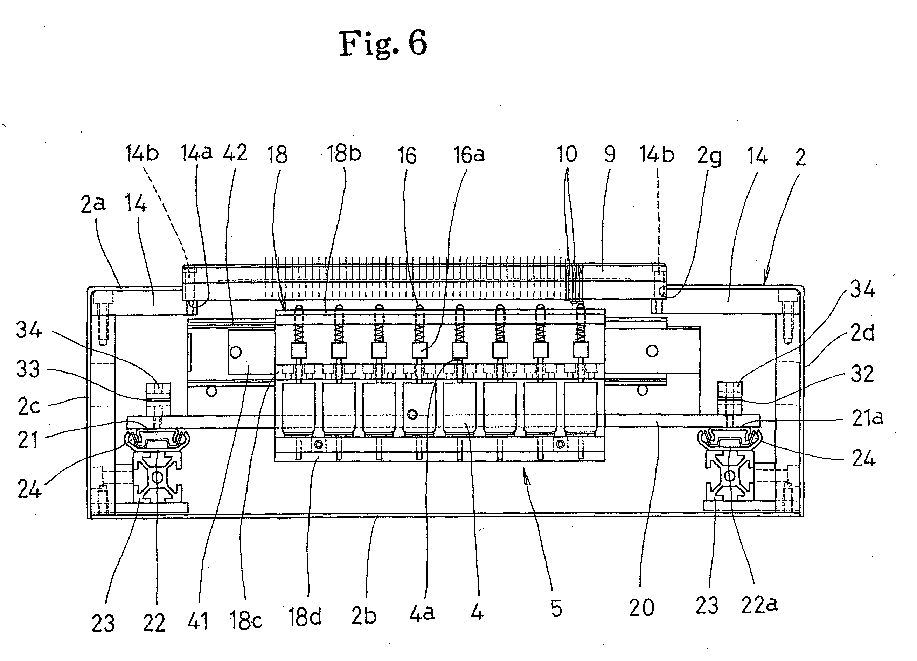

Fig. 6 is a side view of a portion where solenoids are disposed;
Figs. 7(A), (B), (C), (D) and (E) are explanatory operation diagrams of a movable unit;

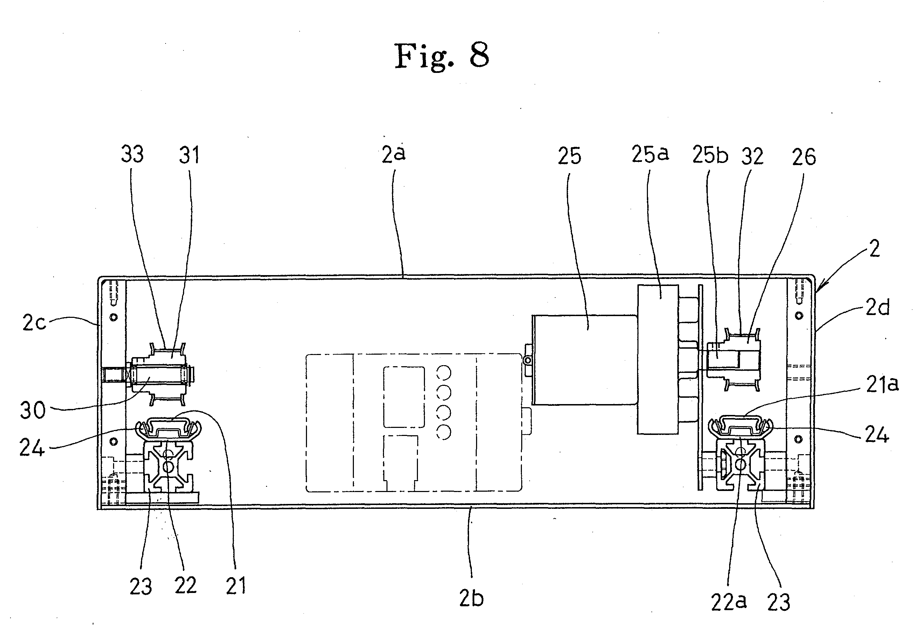

Fig. 8 is a side view of a portion where a motor is disposed;

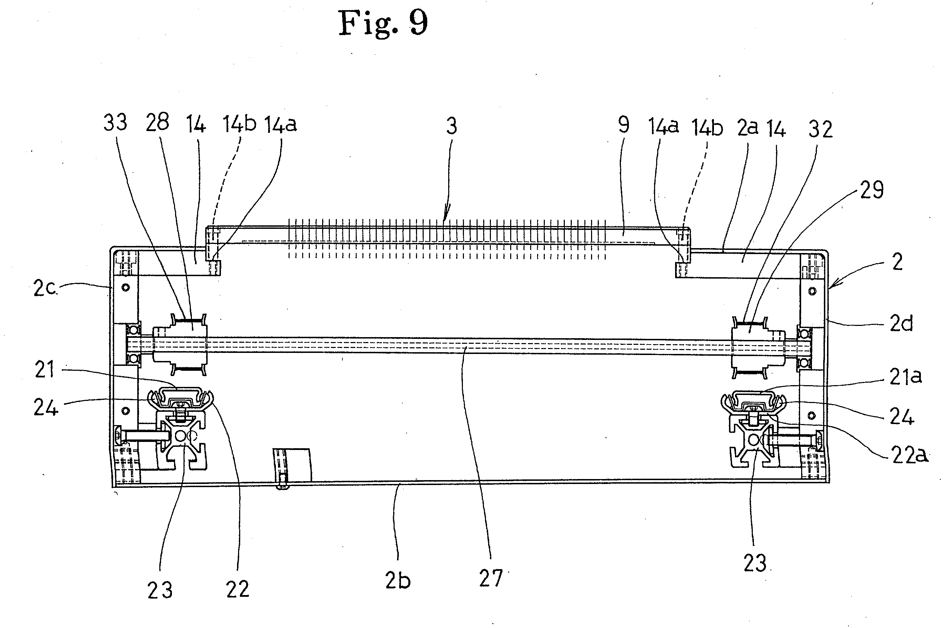

Fig. 9 is a side view of a portion where a rotation axis is disposed;
Fig. 10 is a drawing which shows actuation of a vertical movement mechanism while the movable unit moves to the left-hand side;
Fig. 11 is a drawing which shows actuation of the vertical movement mechanism while the movable unit moves to the right-hand side; and
Fig. 12 is a drawing which shows ratchet arms as they are reset.

### BEST MODE FOR IMPLEMENTING THE INVENTION

An embodiment of the present invention will now be described with reference to the drawings. In the drawings, 1 denotes a tactile display apparatus which displays, as differences in elevation, image information such as a photograph, a graphic and a letter output from a host computer (which corresponds to the external control part of the present invention) 2 so that a visually handicapped person can recognize with his/her tactile sense at the fingertips. This tactile display apparatus 1 comprises components such as a case body 2 which defines a hull, a display board portion 3 which displays differences in elevation, a movable unit 5 seating solenoids (which correspond to the actuators of the present invention) 4 which give rise to differences in elevation on the display board portion 3, a horizontal movement mechanism 6 which moves the movable unit 5 in the horizontal direction and a vertical movement mechanism 7 which moves the movable unit 5 in the vertical direction, and a control part 8 which receives a signal from the host computer PC and outputs a control command to the solenoids 4, the horizontal movement mechanism 6, the vertical movement mechanism 7 and the like based on the signal.

For the convenience of description, assuming that the tactile display apparatus 1 is placed on a desk or the like, the front as being the side facing a visually handicapped person who touches the display board portion 3 will be hereinafter referred to as the front, the back as the rear side, the left as the left-hand side, the right as the right-hand side, the left/right direction as the horizontal direction and the front/back direction as the vertical direction hereinafter. However, the vertical direction and the horizontal direction referred to in the invention are not limited to the defined directions of course.

The case body 2 is shaped like a box having a top surface 2a, a bottom surface 2b and side surfaces 2c, 2d, 2e and 2f on the front, the back, the left and the right. The top surface 2a of the case body 2 has an opening 2g which accepts the display board portion 3.

The display board portion 3 is comprised of a surface board portion 9 which has a rectangular shape, tactile pins 10 which can project beyond and retract from the top surface of the surface board portion 9, and the like. The display board portion 3 is attached to and supported by the case body 2 via support brackets 14 in a condition where the top surface of the display board portion 3 protrudes upwardly beyond the top surface 2a of the case body 2. In this structure, the support brackets 14 comprise stepped portions 14a projecting inward beyond the opening 2g of the top surface 2a of the case body, so that the display board portion 3 can be mounted to the case body 2 as screws 14b are inserted into the stepped portions 14a from above the display board portion 3 in a condition where the display board portion 3 is on the top surface of the stepped portions 14a. The display board portion 3 is thus structured such that the display board portion 3 alone can be freely attached and detached from outside the case body 2.

An upper plate 11 and a lower plate 12 and a friction member 13, which is like a thin film sheet firmly held in an airtight manner between the upper plate and the lower plates 12, are in a laminated manner and assembled into one, whereby the surface board portion 9 forming the display board portion 3 is obtained. A number of through holes 15 are formed in a matrix arrangement in the surface board portion 9, penetrating through the upper plate 11, the friction member 13, and the lower plate 12 in the vertical direction.

There are 48 such through holes in the vertical direction and 64 such through holes in the horizontal direction, i.e., 48 rows and 64 columns for a total of 3072 such through holes 15 in this exemplary embodiment. Each through hole 15 accepts a tactile pin 10 in such a manner that the tactile pin 10 can move upward or downward as controlled. The tactile pin 10 is formed by a main pin part 10a whose top end portion is cone-shaped, a tactile dot part 10b which is fixedly engaged with the top end of the main pin part 10a, and is cylindrical and slightly larger in diameter than the main pin part 10a, a disk-like abutting part 10c whose bottom surface is arc-shaped and which is attached to the bottom end of the main pin part 10a. When actuation pins 16, which will be described later, push the abutting parts 10c from below, the tactile pins 10 rise up to upper movable positions at which the top end portions of the tactile dot parts 10b project upwardly beyond the top surface of the surface board portion 9. Conversely the tactile pins 10 at the upper movable positions, when pushed down by a roller 17 which will be described later, move downwardly to lower movable positions at which the top end portions of the tactile dot parts 10b become approximately flush with the top surface of the surface board portion 9. In this manner, the tactile pins 10 at the upper movable positions and the lower movable positions form differences in elevation, which provides the image information on the display board portion 3.

The inner diameters of the through holes 15 are set such that the through hole portions formed in the upper plate 11 correspond to the diameters of the tactile dot parts 10b of the tactile pins 10, and the through hole portions formed in the friction member 13 and the lower plate 12 correspond to the diameters of the main pin parts 10a of the tactile pins 10. The tactile pins 10 at the lower movable positions are blocked from moving further down when the bottom ends of the tactile dot parts 10b contact the top surface of the friction member 13, and from moving further upwardly when the top surfaces of the abutting parts 10c have abutted with the bottom surface of the lower plate 12.

The friction member 13 is formed by a thin film sheet member, such as leather, rubber or cloth, and corresponds to the pin holding member of the invention. In this exemplary embodiment, the friction member 13 is formed by cloth, such as denim which has friction force. Firmly held in an airtight manner between the upper plate 10 and the lower plate 11, the friction member 13 is held in a state of tension. The tactile pins 10 at the upper movable positions and the lower movable positions are securely and instantly held at these positions by the friction force of the friction member 13. The friction force of the friction member 13 applies a minimal and stable resistance to the tactile pins 10 but does not prevent the tactile pins 10 from moving upward or downward.

Further, the tactile dot parts 10b are formed using spring pins (cylindrical pins having split grooves along the axial direction which are elastic along the radius direction). Owing to the spring force of the spring pins, the tactile dot parts 10b are engaged easily with the main pin parts 10a without fail, while securing strength against vibrations. While the top end portions of the tactile dot parts 10b are to be touched at the fingertips, the top end shoulder portions of the spring pins are square, which is an advantage where a feeling for recognizing and identifying the boundaries between projecting sections is smooth and it is therefore easy to recognize the image information.

The roller 17 is for applying external force which moves those tactile pins 10 at the upper movable positions down to the lower movable positions against the friction force of the friction member 13. The roller 17 is supported for free horizontal rotations by the case body 2 such that the roller 17 can rotate on the surface board portion 9. Hence, as the roller 17 rotates to push down the tactile pins 10 which are at the upper movable position, the tactile pins 10 move down to the lower movable position.

The movable unit 5 is housed within the case body 2 together with the horizontal movement mechanism 6, the vertical movement mechanism 7 and the control part 8. The movable unit 5 comprises eight solenoids 4, the actuation pins 16 which move upward and downward as the solenoids 4 turn on and off, a support frame 18 to which the solenoids 4 and the actuation pins 16 are attached, and the like. Although the movable unit 5 is capable of moving in the horizontal direction and the vertical direction below the display board portion 3 described above, the details of the horizontal and the vertical movement mechanisms 6 and 7 will be given later. Actuation of the actuation pins 16 in accordance with turning on and off of the solenoids 4, the arrangement of the solenoids 4 and movements of the movable unit 5 in the horizontal direction and the vertical direction will now be described.

The support frame 18 is obtained by assembling a top side 18b, a middle side 18c, and a bottom side 18d to a main frame part 18a as one integrated unit. The eight solenoids 4 are equidistantly disposed vertically in a row between the bottom side 18d and the middle side 18c. A plunger 4a of each solenoid 4 penetrates and protrudes upwardly beyond the middle side 18c, and is set so as to move upward when the solenoid is ON and downward when the solenoid is OFF. The actuation pins 16 penetrate through the top side 18b and are accordingly supported by the top side 18b through the springs 19 such that the actuation pins 16 are located above the plungers 4a. Plunger receiving parts 16a are formed as integrated, lower sections of the actuation pins 16.

When the solenoids 4 are OFF, the plungers 4a which are moved down do not push the actuation pins 16. In this condition, the top ends of the actuation pins 16 are slightly away from the abutting parts 10c of the tactile pins 10 which are at the lower movable positions described above.

On the other hand, when the solenoids 4 are ON, the plungers 4a move up to push the plunger receiving parts 16a of the actuation pins 16 from below thereby moving the actuation pins 16 upward. The actuation pins 16 which have thus moved upward push the abutting parts 10c of the tactile pins 10 from below, and the tactile pins 10 move to the upper movable positions as described above.

Those having small inertia are used as these solenoids 4 and it is the control part 8 that controls the turning on and off of the solenoids 4 as described later. To improve a start-up characteristic of the solenoids 4, a capacitor which compensates for a voltage drop is used in an output circuit of the control part 8. Further, when the actuation pins 16, which have moved upward, are to be moved downward, the solenoids 4 are switched from ON to OFF immediately before the plungers 4a arrive at the top end positions and the repulsive force and the spring force of the springs 19 move the actuation pins 16 down. Thus, the actuation pins 16 can quickly move downward. The actuation pins 16, treated with hard alumite, are light yet ensure necessary hardness. The actuation pins 16 move upward or downward at a high speed in this manner as the plungers 4a of the solenoids 4 move upward and downward, and therefore, the actuation pins 16 can move upward or down smoothly while the movable unit 5 moves horizontally as described later in detail. In addition, the movable unit 5 will not contact or become connected (linked, engaged) with the display board portion 3 except for pushing of the abutting parts 10c of the tactile pins 10 by the actuation pins 16, which allows movement of the movable unit 5 in the horizontal direction and the vertical direction at a high speed which will be described later.

Eight of the actuation pins 16 are equidistantly disposed in the vertical direction in a single row. Thus the actuation pins 16 can respond to the respective solenoids 4. The intervals between adjacent actuation pins 16 is disposed for every six, with five intervening tactile pins 10 which are disposed in the vertical direction in the display board portion 3.

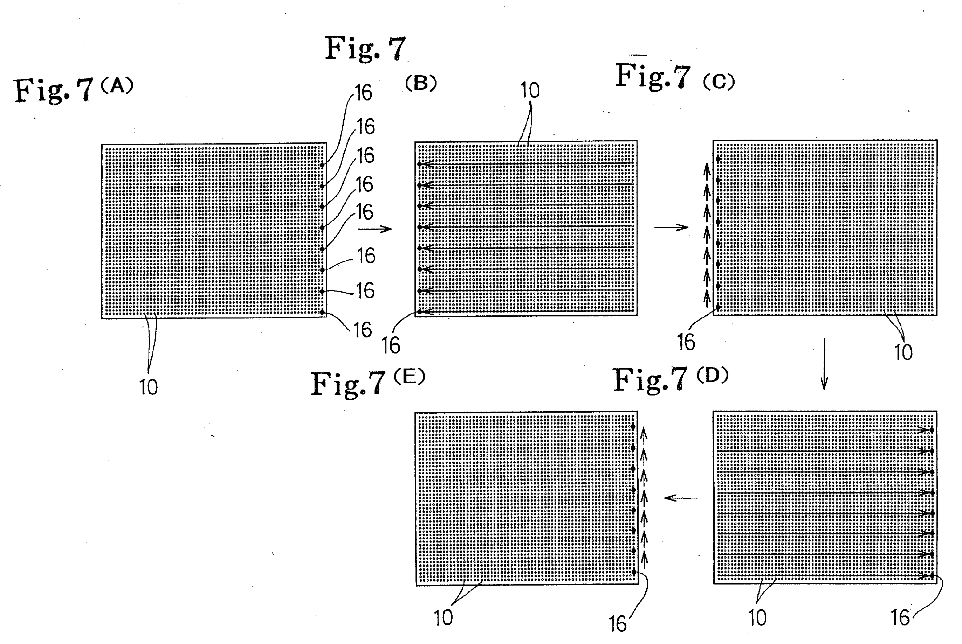

In other words, when the movable unit 5 is located at the origin, as shown in the explanatory operation diagram in Fig. 7 (A), the first actuation pin 16 is at a location which corresponds to the first tactile pin 10 in the first column, the second actuation pin 16 is at a location which corresponds to the seventh tactile pin 10 in the first column, and the n-th actuation pin 16 (n = 1 through 8) is at a location which corresponds to the {(n - 1) × 6 + 1}-th tactile pin 10 in the first column.

In the explanatory operation diagrams in Fig. 7, the right-most column is the first column, the columns arranged to the left are the second, the third and subsequent columns, and the left-most column is the 64-th column. The bottom row is the first row, the rows above are the second, the third and subsequent rows, and the top row is the 48-th row. Further, although the actuation pins 16 can move horizontally beyond the tactile pins 10 which are in the first and the 64-th columns as described later, for the purpose of description below, the range of horizontal movements of the actuation pins 16 will be from the first to the 64-th columns of the tactile pins 10.

In response to a start-up command from the control part 8, the movable unit 5 located at the origin moves horizontally toward the left-hand side from the first column of the tactile pins 10 to the 64-th column of the tactile pins 10 as shown in Fig. 7(B). After the actuation pins 16 have arrived at the 64-th column of the tactile pins 10, the movable unit 5 moves vertically for one row at the back of the tactile pins 10 as shown in Fig. 7(C). As a result, the first actuation pin 16 is at the location which corresponds to the tactile pins 10 in the second row, the second actuation pin 16 is at a location which corresponds to the tactile pins 10 in the eighth row, and the n-th actuation pin 16 (n = 1 through 8) is at a location which corresponds to the tactile pins 10 in the {(n - 1) × 6 + 2}-th row. Following this, the movable unit 5 moves horizontally toward the right-hand side from the 64-th column of the tactile pins 10 to the first column of the tactile pins 10 as shown in Fig. 7(D), and after reaching the first column of the tactile pins 10, moves vertically only one row to the back of the tactile pins 10 as shown in Fig. 7(E). This horizontal and vertical movement is repeated for three reciprocal movements in the horizontal direction, whereby eight actuation pins 16 are located at locations which correspond to all 3072 tactile pins 10. Thus, the eight solenoids 4 move all tactile pins 10 upward and downward.

With respect to the horizontal movement mechanism 6 which moves the movable unit 5 in the horizontal direction, the movable unit 5 is supported by a first cradle 20 which will be described later in such a manner that the movable unit 5 can move vertically but not horizontally and therefore the movable unit 5 moves together with the first cradle 20 in the horizontal direction when the first cradle 20 moves in the horizontal direction. Horizontal movements of the first cradle 20 will now be described.

Horizontal guide members 21, 21a elongated in the left/right direction are fixed to the front and the back end portions of the first cradle 20. Meanwhile, the side surfaces 2c, 2d on the front and the back of the case body 2 mount, through support members 23, horizontal rails 22, 22a elongated in the left/right direction. The horizontal rails 22, 22a on the front and the back receive, via bearings 24, the front and the back horizontal guide members 21, 21a in such a manner that the horizontal guide members 21, 21a can freely move along the left/right direction (horizontal direction).

A motor 25 is disposed in a back right portion inside the case body 2. Rotational drive in the forward and the backward directions of the motor 25 is output at an output axis 25b via a decelerator part 25a. A drive pulley 26 is fixed to the output axis 25b as an integrated part. A rotation shaft 27 is supported for free axial rotations at the left end portions of the front and back side surfaces 2c, 2d of the case body 2. First and second driven pulleys 28, 29 are fixed to the rotation shaft 27 at the front and the back end portions as integrated parts. Further, a spindle 30 is axially received by a right-hand portion of the front side surface 2c of the case body 2 at such a location which is coaxial with the output axis 25b, and a third driven pulley 31 is axially disposed to freely rotate on the spindle 30.

A drive belt 32 runs between the drive pulley 26 and the second driven pulley 29, and a driven belt 33 runs between the first driven pulley 28 and the third driven pulley 30. The front and the back end portions of the first cradle 20 are fixed to and integrated with the drive belt 32 and the driven belt 33, respectively, via retainer members 34.

Rotational drive in the forward and the backward directions of the motor 25 is transmitted to the drive pulley 26 from the output axis 25b, moving the drive belt 32 in the left/right direction, and further transmitted from the second driven pulley 29 to the first driven pulley 28 via the rotation shaft 27, moving the driven belt 33 in the left/right direction, and as the drive belt 32 and the driven belt 33 move in the left/right direction, the first cradle 20 moves in the left/right direction.

While the front and the back horizontal guide members 21, 21a elongated in the left/right direction, are fixed to the front and the back ends of the first cradle 20 as described above, a second cradle 35 is further fixed to the front and the back horizontal guide members 21, 21a. In short, the first and the second cradles 20, 35 are linked as one integrated unit via the front and the back horizontal guide members 21, 21a, and hence, as the first cradle 20 described above moves in the left/right direction, the second cradle 35 also moves in the left/right direction.

A linear plate 36 elongated in the left/right direction is attached as one integrated unit to the second cradle 35. The linear plate 36 has 64 pieces of comb-like grooves 36a, which correspond to the horizontal arrangement of the tactile pins 10, are lined up in the horizontal direction of the linear plate 36. On the other hand, the bottom surface 2d of the case body 2 seats first through fourth photosensors 37-40 which have light emitting elements and light receiving elements for detection of the location of the linear plate 36.

As the first to the fourth photosensors 37-40 detect the location of the linear plate 36, the location of the movable unit 5 which moves in the left/right direction together with the linear plate 36 is detected. In other words, when the first photosensor 37 detects the right-most position of the linear plate 36, it detects the movable unit 5 has come to the stop position. When the second photosensor 38 detects the right-most position of the linear plate 36, a right-hand side reverse position is detected at which the movement of the movable unit 5 is reversed from the right-hand side to the left-hand side. The third photosensor 39 detects the locations of the comb-like grooves 36a of the linear plate 36, thereby sensing the timing to turn the solenoids 4 on, namely, the timing at which the actuation pins 16 are to move the tactile pins 10 upward. The fourth photosensor 40 is set so as to detect the left-most position of the linear plate 36, to thereby detect a left-hand side reverse position at which the movement of the movable unit 5 is reversed from the left-hand side to the right-hand side.

The second cradle 35 is mounted to the control part 8, and the control part 8 is formed using a general-purpose control unit such as a PLC. Based on an output signal from the host computer PC, detection signals from the first to the fourth photosensors 37 through 40, etc., the control part 8 outputs control commands to the motor 25, the solenoids 4, etc. , thereby controlling the motor 25 to drive forward or backward or to stop, the solenoids 4 to turn on or off, etc.

With respect to the vertical movement mechanism 7 which moves the movable unit 5 in the vertical direction (front/back direction), the eight solenoids 4 and the actuation pins 16 are attached to and supported by the support frame 18 in the movable unit 5 as described above, and when the support frame 18 moves vertically relative to the first cradle 20, the movable unit 5 moves in the vertical direction.

That is, a guide member 41 elongated in the front/back direction, is fixed to the main frame part 18a of the support frame 18. Meanwhile, the first cradle 20 seats a vertical rail 42 elongating in the front/back direction, and the guide member 41 is engaged with the vertical rail 42 via a bearing 43 such that the guide member 41 can move freely in the front/back direction (vertical direction).

A rack 44, elongated in the front/back direction, is fixed to the bottom side 18d of the support frame 18. Ratchet gear teeth 44a are formed in a front and a back gear portions 44a, 44b of the rack 44. In addition, a spring (not shown) which urges the rack 44 toward the front is linked to the rack 44.

Third cradle 45 is fixedly attached below the second cradle 35 with a gap therebetween. The third cradle 45 and the first cradle 20 are linked as one integrated unit via the front and the back horizontal guide members 21, 24a and the second cradle 35. Hence, when the first cradle 20, described above, moves in the left/right direction, the third cradle 45 moves in the left/right direction as one integrated unit.

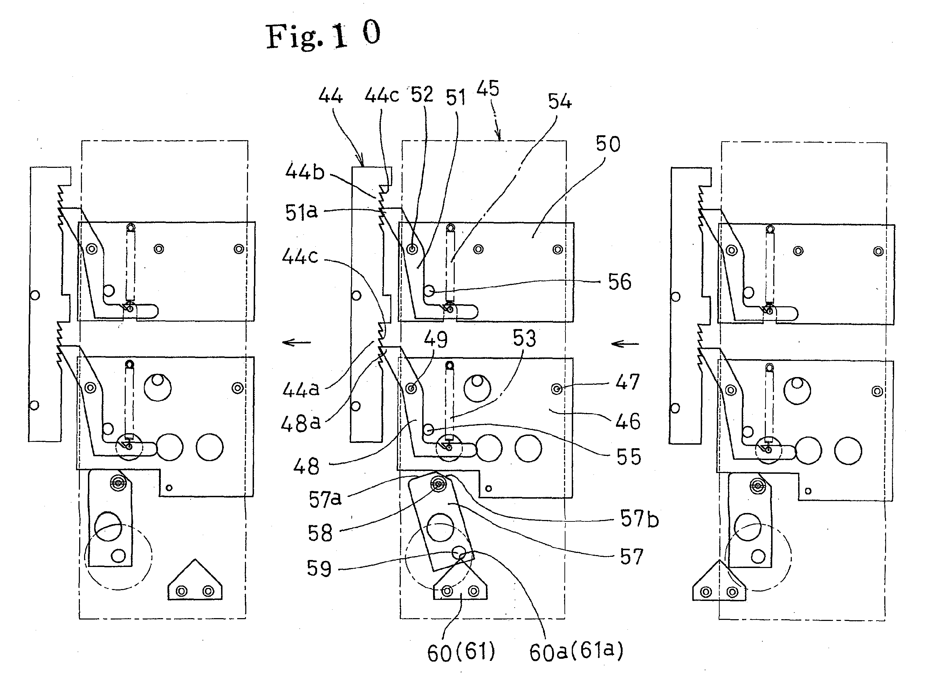

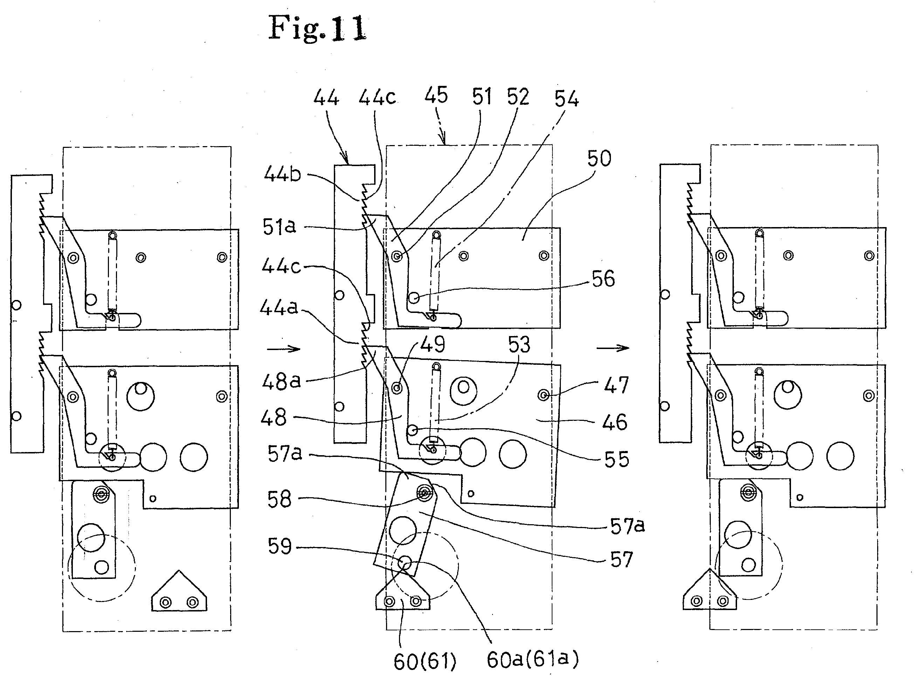

A swing plate 46 is axially supported, via a pin axis 47 for free pivoting, by the third cradle 45. The swing plate 46 axially supports, via a pin axis 49, a front ratchet arm 48 for free pivoting. A fixed plate 50 is fixed to the third cradle 45. The fixed plate 50 axially supports, via a pin axis 52, a back ratchet arm 51 for free pivoting. Backstop parts 48a, 51a, which can freely fit with and leave ratchet gear teeth 44c of the front and the back gear portions 44a, 44b of the rack 44, are formed at the top ends of the front ratchet arm 48 and the back ratchet arm 51, and the front ratchet arm 48 and the back ratchet arm 51 are always urged by the urging force of springs 53, 54 in the direction in which the backstop parts 48a and 51a engage with the ratchet gear teeth 44c (the counter-clockwise direction in Fig. 10 and Fig. 11). When the backstop parts 48a, 51a are fit with the ratchet gear teeth 44c, the rack 44 can move toward the back but not toward the front, thereby realizing the one-way clutch mechanism of the invention. Stoppers 55, 56 are provided for the front ratchet arm 48 and the back ratchet arm 51.

Further, the swing plate 46 is set such that it swings between a non-swing position at which it becomes approximately parallel to the fixed plate 50 and a swing position at which it has swung clockwise from the non-swing position, and the swing plate 46 is always urged toward the non-swing position by the urging force of a spring not shown.

Still further, the third cradle 45 axially supports a back portion of an actuation lever 57 via a pin axis 58 for free swinging. A pressing portion 57a which contacts the swing plate 46 is formed on the left-hand side of the actuation lever 57 as a boundary of the pin axis 58 while a notched portion 57b which is notched in a direction away from the swing plate 46 is formed on the right-hand side of the actuation lever 57 as a boundary of the pin axis 58. In addition, an actuation projection 59 is disposed at the front end of the actuation lever 57, projecting downward.

A left-hand side dog 60 and a right-hand side dog 61 are attached to the bottom surface 2b of the case body 2. The dogs 60, 61, when viewed in plan view, look like triangles whose vertexes 60a, 61a are central portions along the left/right direction. The dogs 60 and 61 are set such that they interfere with the actuation projection 59, which moves in the left/right direction as the third cradle 45 moves in the left/right direction, and make the actuation projection 59 swing. Actuation of the actuation lever 57 will now be described.

First, as shown in Fig. 10, when the actuation projection 59 moving toward the left-hand side abuts with the dogs 60, 61 from the right-hand side, the actuation lever 57 swings counter-clockwise, and therefore, the actuation projection 59 moves over the vertexes 60a, 61a of the dogs 60, 61. At this stage, because the notched portion 57b of the actuation lever 57, swung counter-clockwise, is faced with the swing plate 46, the actuation lever 57 will not act upon the swing plate 46 and the swing plate 46 is held at the non-swing position.

On the contrary, as shown in Fig. 11, when the actuation projection 59 moving toward the right-hand side abuts with the dogs 60, 61 from the left-hand side, the actuation lever 57 swings clockwise. Therefore, the actuation projection 59 moves over the vertexes 60a, 61a of the dogs 60, 61. At this stage, the pressing portion 57a of the actuation lever 57 is swung clockwise to push the swing plate 46 and make the swing plate 46 swing at the swing position. As the swing plate 46 thus swings, the front ratchet arm 48 engaged with the ratchet gear teeth 44c of the front gear portion 44a of the rack 44 feeds the rack 44 one tooth.

When the actuation projection 59, moving toward the left-hand side, passes over the dogs 60, 61, the swing plate 46 does not swing and the rack 44 therefore does not move vertically. Meanwhile, when the actuation projection 59 moving toward the right-hand side passes over the dogs 60, 61, the rack 44 moves toward the back by one tooth and the movable unit 5 moves vertically toward the back together with the rack 44 as one unit. The amount of movement is set the same as one gap between the rows of the tactile pins 10 described earlier.

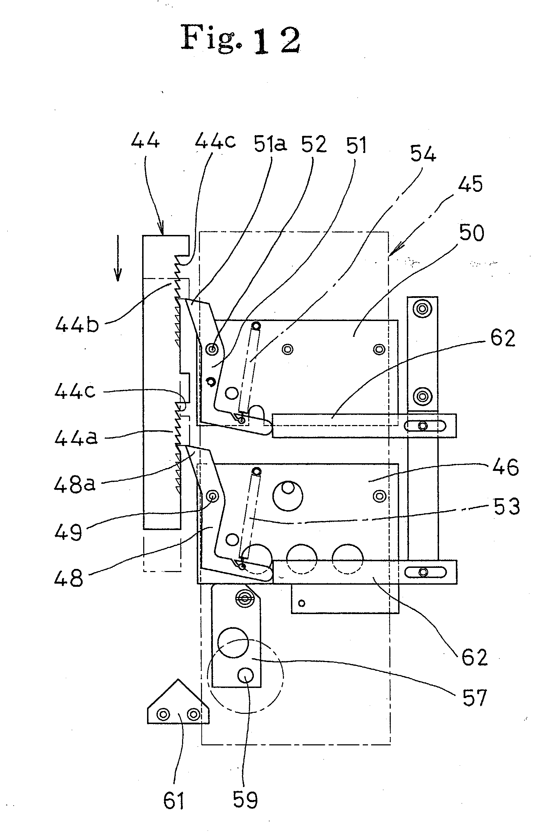

An abut member for reset 62 is attached to the bottom surface 2b of the case body 2. The abut member for reset 62 is set such that when the movable unit 5 has moved toward the right-hand side to a stop position which will be described later, the abut member for reset 62 abuts with the front ratchet arm 48 and the back ratchet arm 51 and the ratchet arms 48, 51 swing clockwise. As the ratchet arms 48, 51 swing clockwise, the backstop parts 48a, 51a and the ratchet gear teeth 44c are reset, i.e., become disengaged from each other, the rack 44 is allowed to move toward the front, and the rack 44 moves toward the front when urged by the spring (Fig. 12).

A description will now be given about horizontal movements (movements along the left/right direction) and vertical movements (movements along the front/back direction) of the movable unit 5 and a relationship between the first to the fourth photosensors 37 through 40, the left-hand side and the right-hand side dogs 60, 61 and the abut member for reset 62.

First, before the motor 25 starts moving, the front and the back ratchet arms 48, 51 abut with the abut member for reset 62, and the backstop parts 48a, 51a and the ratchet gear teeth 44c of the rack 44 are reset, i.e., are disengaged from each other. At this stage, the rack 44 is located at the front-most position, and the movable unit 5 is set such that the n-th actuation pin 16 (n = 1 through 8) comes to the right-hand side to the tactile pin 10 which is in the first column and the {(n - 1) × 6 + 2}-th row when the rack 44 is at the front-most position. Meanwhile, the actuation projection 59 comes to the right-hand side of the right-hand side dog 61.

Next, as the control part 8 outputs a start-up command, the motor 25 drives the movable unit 5 and the vertical movement mechanism 7 toward the left-hand side. As this occurs, the front and the back ratchet arms 48, 51 move away from the abut member for reset 62 and swing counter-clockwise owing to the urging force of the springs 53, 54, and the backstop parts 48a, 51a engage with the front-most ratchet gear teeth 44c of the front and the back gear portions 44a, 44b. Further, before the actuation pins 16 reach the tactile pins 10 belonging to the first column, the actuation projection 59 passes over the right-hand side dog 61. On this occasion, because the actuation projection 59 is moving toward the left-hand side, the movable unit 5 does not move vertically. After the actuation projection 59 has passed over the right-hand side dog 61, the actuation pins 16 reach the tactile pins 10 belonging to the first column and move further to the left-hand side toward the tactile pins 10 belonging to the 64-th column, during which the third photosensor 39 detects the timing of turning on of the solenoids. Based on the timing detection signal from the third photosensor 39 and an image information signal from the host computer PC, an ON-command is fed to selected ones of the solenoids 4, the actuation pins 16 move upward and make the corresponding tactile pins 10 move to the upper movable positions. As the actuation pins 16 passe beyond the tactile pins 10 belonging to the 64-th column, the actuation projection 59 passes over the left-hand side dog 60. At that time, because the actuation projection 59 is moving toward the left-hand side, the movable unit 5 does not move vertically. After the actuation projection 59 has passed over the left-hand side dog 60, the fourth photosensor 40 detects the left-hand side reverse position and the motor 25, after stopping once, drives to move the movable unit 5 toward the right-hand side.

As movement to the right-hand side starts, first, the actuation projection 59 passes over the left-hand side dog 60. On this occasion, because the actuation projection 59 is moving toward the right-hand side, the rack 44 moves to the back by one tooth. Therefore, the movable unit 5 moves one row at the back of the tactile pins 10. Consequently, the n-th actuation pin 16 comes to the right-hand side to the tactile pin 10 which is in the 64-th column and the {(n - 1) × 6 + 2}-th row. After the actuation projection 59 has passed over the left-hand side dog 60, the actuation pins 16 reach the tactile pins 10 belonging to the 64-th column and move further to the right toward the tactile pins 10 belonging to the first column, during which the third photosensor 39 detects the timing of turning on of the solenoids as in the case of the movement to the left-hand side described above and an ON-command is fed to selected ones of the solenoids 4. As the actuation pins 16 passe beyond the tactile pins 10 belonging to the first column, the actuation projection 59 passes over the right-hand side dog 61. In this case, because the actuation projection 59 is moving toward the right-hand side, the rack 44 moves to the back by one tooth. Therefore, the movable unit 5 moves one row at the back of the tactile pins 10. As a result, the n-th actuation pin 16 comes to the right-hand side to the tactile pin 10 which is in the first column and the { (n - 1) × 6 + 3}-th row. After the actuation projection 59 has passed over the right-hand side dog 61, the second photosensor 38 detects the right-hand side reverse position and the motor 25, after stopping once, drives to move the movable unit 5 toward the left-hand side.

In a similar fashion, the movement toward the left-hand side and the movement toward the right-hand side of the movable unit 5 is repeated for three reciprocal movement. During he third movement toward the right-hand side, the motor 25 does not stop even when the second photosensor 38 detects the right-hand side reverse position and the movable unit 5 further moves toward the right-hand side. As the movable unit 5 further moves toward the right-hand side beyond the right-hand side reverse position, the ratchet arms 48, 51 abut with the abut ember for reset 62, the backstop parts 48a, 51a and the ratchet gear teeth 44a of the rack 44 are reset, i.e., are disengaged from each other. Hence, the rack 44 moves toward the front and returns to the state as it was before the motor started. In synchronization with this, the first photosensor 37 detects the stop position, the motor 25 stops and the horizontal and vertical movement of the movable unit 5 end.

The control part 8 of the tactile display apparatus 1 controls turning on and off of the solenoids 4 based on a data signal from the host computer PC, differences in elevation are created among the tactile pins 10, and an image is displayed. Briefly with respect to control for the host computer PC, first, the host computer PC receives image data such as a camera image and a scanner image, processes the received image data in an image processing module, and creates an image file (e.g. , jpeg, bitmap).

This is followed by pixelating the data of the image file in accordance with the arrangement of the tactile pins 10 of the tactile display apparatus 1 described above, to thereby turn the data into a 64 × 48 grid.

To divide pixels thus treated by pixelation into convexes (corresponding to ON solenoids) and concaves (corresponding to OFF solenoids) on the display board portion 3, binarization is executed with reference to a threshold value which has been determined in advance.

The binarized data are sorted in accordance with an order in which the solenoids 4 of the tactile display apparatus 1 act upon the tactile pins 10, and the 64 × 48 = 3072 pixels are divided into a few blocks and output in a predetermined serial communication format (e.g., as ASC data) in the block order, at a COM port, to the tactile display apparatus 1. A control code is transmitted concurrently, for the purpose of control to start up the display apparatus 1.

By means of the exemplary structure described above, the tactile display apparatus 1 shows image information, such as a photograph, a graphic and/or a letter, as differences in elevation created among the tactile pins 10 which are disposed in a matrix arrangement. When a visually handicapped person touches the display by hand, he/she can recognize the image information. The solenoids 4 for controlling projecting or retracting of the tactile pins 10 are disposed at the movable unit 5 which is capable of moving horizontally and vertically.

This greatly reduces the number of the solenoids 4 relative to many tactile pins 10 which are disposed in a matrix arrangement, achieves a reduction in the number of the components, shortens the assembling step and contributes to cost reduction.

Further, a solenoid 4 is disposed in a row vertically with five tactile pins 10 spacing between adjacent solenoids 4, and the tactile pins 10 also are disposed in the vertical direction. As the movable unit 5 moves in the horizontal direction and the vertical direction repeatedly, all tactile pins 10 are moved upward by the solenoids 4. Because this contributes to a reduction in the number of the solenoids 4 and allows setting the adjacent gaps between the tactile pins 10 narrowly without being restricted by the dimensions of the solenoids 4, it is possible to finely display information, such as an image, and obtain a sharp tactile screen at a high resolution. While the intervals between the solenoids 4 are five tactile pins 10 between adjacent solenoids 4 in this exemplary embodiment, the invention is not so limited and any desired number of tactile pins can be disposed between adjacent solenoids. Alternatively, the solenoids may be disposed in a row not only vertically but also horizontally or even in a plurality of rows.

In addition, while control of the projecting of the tactile pins 10 by the solenoids 4 is achieved via the actuation pins 16, because the actuation pins 16 rise up and push up the tactile pins 10 to the upper movable positions as the solenoids turn on but move down and leave the tactile pins 10 when the solenoids turn off and because the upward movement of the actuation pins 16 takes place while the movable unit 5 moves, projecting and the subsequent retracting, using roller 17, of the tactile pins 10 is controlled continuously and efficiently.

Even further, because the movable unit 5 will not contact or become connected with the display board portion 3 except for pushing of the tactile pins 10 by the actuation pins 16, the movable unit 5 moves vertically and horizontally at a high speed and data inputted from the host computer PC is displayed quickly on the display board portion 3.

Because the movable unit 5 moves horizontally beyond the range in which the solenoids 4 move the tactile pins 10 upward and the movable unit 5 moves vertically while moving in the horizontal direction beyond this range, the movable unit 5 can move in the vertical direction and the horizontal direction in turn smoothly even when the timing of the vertical movement is not strictly set.

The display board portion 3, penetrated and supported by the tactile pins 10, is obtained by assembling the upper and the lower plates 11, 12 and the friction member 13, which is like a sheet firmly held in an airtight manner between the upper and the lower plates 11, 12, in a laminated manner. This maintains the friction member 13 in a state of tension, securely holds the tactile pins 10 at the upper movable positions and the lower movable positions, and finishes the display board portion 3 like a compact kit which is the item between the top and the bottom.

Further, the display board portion 3 is attached to the case body 2 in such a manner that the display board portion 3 alone can be freely attached and detached from outside the case body 2. Hence, it is easy to attach and detach the display board portion 3, which contributes to an improvement in the ease of assembly and maintainability.

### INDUSTRIAL APPLICABILITY

The tactile display apparatus according to the present invention, which allows a visually handicapped person to recognize image information, such as a photograph, a graphic and a letter, with his/her tactile sense at the fingertips. The present invention is effective particularly when the number of components is to be reduced, when crisscross adjacent gaps are to be shortened without any restriction imposed by actuators, when the display board portion is to be compact, when the ease of assembly, maintainability and the like are to be improved, when image information fed to the external control part is to be accurately displayed as differences in elevation among the tactile pins, etc.

## Claims

1. A tactile display apparatus in which tactile pins disposed crisscross in a matrix arrangement on a display board portion are capable of freely projecting and retracting and information such as an image is displayed in accordance with concavities and convexities formed as said tactile pins project and retract, comprising:
a movable unit which is capable of freely moving in the vertical direction and the horizontal direction relative to said display board portion;
actuators disposed at said movable unit so as to control projecting and retracting of said tactile pins;
a control part which controls driving of said actuators in accordance with an information signal such as an image input from outside; and
movement mechanisms which move said movable unit in the vertical direction and the horizontal direction.

2. The tactile display apparatus according to claim 1, wherein said actuators which control projecting and retracting of said tactile pins are provided to said movable unit so as to be disposed in a vertical row and/or horizontal row , one for every preset number of said tactile pins lined up in the vertical direction and/or the horizontal direction.

3. The tactile display apparatus according to claim 1 or 2, wherein said display board portion comprises an upper and a lower plates, a pin holding member which is like a sheet firmly held airtight between said upper and said lower plates, and said tactile pins penetrating and supported in through holes which are formed crisscross in a matrix arrangement in said upper and said lower plates and said pin holding member.

4. The tactile display apparatus according to claim 3, wherein said pin holding member is formed by cloth such as denim which has friction force.

5. The tactile display apparatus according to one of claims 1 through 4, wherein said display board portion is attached to a top surface portion of a case body of the tactile display apparatus in such a manner that said display board portion by itself can be freely attached to and detached from said case body from outside.

6. The tactile display apparatus according to one of claims 1 through 5, wherein said tactile pins are formed by attaching tactile dot parts, which are formed by spring pins, to the tip end portions of main pin parts.

7. The tactile display apparatus according to one of claims 1 through 6, wherein said actuation pins which move forward and backward as said actuators operate are disposed at said movable unit, said tactile pins protrude as said actuation pins move forward, said actuation pins move away from said tactile pins when retracting, and said actuation pins move forward and backward while said movable unit moves.

8. The tactile display apparatus according to claim 7, wherein said movable unit moves while avoiding any contact or connection with said display board portion except for said actuation pins contacting said tactile pins.

9. The tactile display apparatus according to one of claims 1 through 8, wherein said movable unit is supported for free vertical movements via a vertical movement mechanism by a cradle which is supported for free horizontal movements via a horizontal movement mechanism by said case body of the tactile display apparatus.

10. The tactile display apparatus according to one of claims 1 through 9, wherein said movable unit moves horizontally beyond the range in which said actuators control projecting and retracting of said tactile pins, and said movable unit moves vertically while moving horizontally beyond the range in which projecting and retracting of said tactile pins is controlled.

11. The tactile display apparatus according to one of claims 1 through 10, wherein said vertical movement mechanism of said movable unit comprises an actuating member which moves horizontally and integrally with said movable unit, a fixed member which is fixed to said case body side of the tactile display apparatus, and a one-way clutch mechanism which moves said movable unit vertically in association with interference of said actuating member moving horizontally with said fixed member.

12. The tactile display apparatus according to claim 11, wherein said fixed member is disposed at the both end sides of the range in which said movable unit moves horizontally, said movable unit is caused to move vertically in association with interference of said actuating member with said fixed member which is caused as said movable unit moves horizontally toward one side, whereas said movable unit does not move vertically during interference of said actuating member with said fixed member which is caused as said movable unit moves horizontally toward the other side.

13. A control method for a tactile display apparatus in which tactile pins disposed crisscross in a matrix arrangement on a display board portion are capable of freely projecting and retracting and information such as an image is displayed in accordance with concavities and convexities formed as said tactile pins project and retract, comprising: a movable unit which is capable of freely moving in the vertical direction and the horizontal direction relative to said display board portion; actuators disposed at said movable unit so as to control projecting and retracting of said tactile pins; a control part which controls driving of said actuators in accordance with an information signal such as an image input from outside; movement mechanisms which move said movable unit in the vertical direction and the horizontal direction; and an external control part for outputting an information signal such as an image to the tactile display apparatus,
said external control part pixelating information fed to said external control part into pixels in accordance with the number of said tactile pins which are disposed, binarizing said pixels so that the respective pixels will correspond to projecting and retracting of said tactile pins, sorting thus binarized signals in the order of driving said actuators, and outputting thus binarized signals to the tactile display apparatus.
